# EUROPÄISCHE PATENTSCHRIFT

(11) **EP 0 861 742 B1**
(45) Veröffentlichungstag und Bekanntmachung des Hinweises auf die Patenterteilung: **25.07.2001**
(21) Anmeldenummer: 98102266.8
(22) Anmeldetag: 10.02.1998
(51) Int. Cl.: B60C 13/04, B60C 1/00, B60C 13/00, B44C 1/17, C09J 7/02

(54) **Farbband zur Verzierung von Gummioberflächen**
Coloured strip for decoration of rubber surfaces
Bande de couleur pour la décoration de surfaces en caoutchouc

(30) Priorität: 28.02.1997 DE 19708233
(43) Veröffentlichungstag der Anmeldung: 02.09.1998
(73) Patentinhaber: Beiersdorf Aktiengesellschaft, 20245 Hamburg (DE)
(72) Erfinder: Schümann, Uwe, Dr., 25421 Pinneberg (DE); Lamm, Dirk, Dr., 25436 Tornesch (DE); Junghans, Andreas, 22457 Hamburg (DE)

(56) Entgegenhaltungen:
- WO-A-95/08419
- US-A- 4 461 795
- PATENT ABSTRACTS OF JAPAN vol. 009, no. 055 (M-362), 9. März 1985 & JP 59 190010 A (BRIDGESTONE KK), 27. Oktober 1984

## Beschreibung

Die Erfindung betrifft ein mehrschichtiges Farbband zur Verzierung von Gummioberflächen, das vorzugsweise im Heißlaminierverfahren auf vulkanisierte Gummioberflächen, insbesondere auf die Seitenwände von Fahrzeugreifen, dauerhaft geklebt werden kann.

Farbliche Verzierungen von Gummioberflächen, insbesondere Autoreifen, sind in verschiedenen Ausführungsformen Stand der Technik. Beispielhaft seien hier die sogenannten "Weißwandreifen" genannt. Fast allen Techniken zur Herstellung dieser Reifen ist gemeinsam, daß ein dauerhafter Verbund zwischen dem Reifen und dem Farbband, beziehungsweise allgemein der farblichen Markierung, durch eine Zusammenvulkanisation erreicht wird, d.h., daß der Reifen und die Markierung unter Aufwendung von Druck und Hitze für eine bestimmte Zeit zusammengeführt werden, also miteinander chemisch zur Reaktion gebracht werden.
Die Dauer der Druck- und Hitzeeinwirkung richtet sich nach dem eingesetzten Vulkanisationssystem. In jedem Fall sind bei Fahrzeugreifen einige Minuten vonnöten.

US-A-4,461,795 beschreibt eine mehrschichtige Farbmarkierung, die nicht durch Vulkanisation, sondern im Heißlaminierverfahren auf Reifenoberflächen geklebt werden kann. Die drei wesentlichen Schichten sind die Schmelzklebstoffschicht aus einem thermoplastischen Polyester oder thermoplastischen Polyurethan, die Antimigrationssperrschicht aus Nylon oder PVDC und die Farbschicht auf Basis Polychloropren und chlorsulfoniertem Polyethylen. Obwohl das beschriebene Dreischichtsystem unzweifelhaft die Vorteile bietet, daß ein Verbund zur Reifenoberfläche in wenigen Sekunden statt in Minuten hergestellt ist, und eine Verfärbung durch migrierende Alterungsschutzmittel nicht oder nur in geringem Maße stattfindet, hat es auch einige Nachteile.

So hat sich in eigenen Versuchsreihen gezeigt, daß eine gute Verbundfestigkeit zwar auf Altreifen erreicht wird, nicht aber auf PKW-Neureifen.
Für die Untersuchungen wurden dabei folgende Neureifenmarken herangezogen:
Dunlop SP 65 185/65 R14, Uniroyal rallye 380/65 185/65 R14 86T, Winston Value Plus 185/70 HR15 88H und Fulda 195/70 R14 91T.

Außerdem ist in US-A-4,461,795 die chemische Vernetzung und damit die Lösungsmittelbeständigkeit der Farbschicht nur über eine Vulkanisation (30 min bei 155 °C) zu erreichen, was für die Herstellung von Ballenware unpraktikabel ist.

Ferner ist ein nach dem in US-A-4,461,795 beschriebenen Prinzip hergestelltes Farbband nicht auf dem Applikationsgerät der Firma Stahlgruber verarbeitbar, wie es in der deutschen Patentanmeldung DE 38 15 542 A1 beschrieben ist. Ein derartiges Farbband übersteht nicht den Rollreibungsdruck zwischen dem heißen Stempel und dem Reifen ohne Schäden. Es kommt zu Verformungen und Einreißern.

Aufgabe der Erfindung war es, ein einfach aufgebautes Farbband zu schaffen, das auf Gummioberflächen, insbesondere Fahrzeugreifen, dauerhaft geklebt werden kann.

Gelöst wurde die Aufgabe durch den im folgenden beschriebenen mehrschichtigen Produktaufbau des Farbbandes. Gegenstand der Unteransprüche sind dabei vorteilhafte Weiterbildungen des Farbbands.

Demgemäß setzt sich das Farbband zur Verzierung von Gummioberflächen erfindungsgemäß zusammen aus einer Farbschicht aus einem 2-Komponenten-Polyurethanfarblack und einer Klebstoffschicht, die vorzugsweise aus einem thermoplastischen Polyamidharz besteht.

Als Farbschicht wird ein deckender 2-Komponenten-Polyurethanfarblack verwendet. Basis der farbgebenden Komponente ist bevorzugt ein Polyester. Die Härter-Komponente basiert bevorzugt auf Hexamethylen-1,6-diisocyanat oder auf Isophorondiisocyanat. Die wichtigsten Auswahlkriterien sind eine gute Haftung zur Klebstoffschicht beziehungsweise der Sperrschicht, eine hohe Flexibilität, Wetterfestigkeit und Vergilbungsfestigkeit. Ein solcher 2-Komponenten-Polyurethan-Kunststoffdecklack ist zum Beispiel von der Firma BASF Lacke & Farben AG unter der Bezeichnung PUR-Farbe für Kunststoff ® frei im Handel erhältlich. Der zugehörige Härter trägt die Bezeichnung PUR Zusatzlack Gelblich ®.
Die Farbschicht weist vorteilhafterweise eine Dicke von 10 µm bis 500 µm, insbesondere 40 µm bis 100 µm, auf.

Die Polyamidharze der Klebstoffschicht sind das Polykondensationsprodukt aus dimerisierten Fettsäuren mit Diaminen. Diese Stoffgruppe ist zum Beispiel von der Firma Witco unter dem Handelsnamen "Euremelt" ® als elastisches Granulat frei im Handel erhältlich. Dann werden die Polyamidharze in flexible Typen, spröd-harte Typen und zäh-harte Typen unterteilt. Ein weiteres Unterteilungskriterium ist der Erweichungspunkt. Im Farbband werden bevorzugt flexible Typen mit einem Erweichungspunkt von 70 °C bis 150 °C eingesetzt.
Als Klebstoffschicht wird bevorzugt ein spezielles thermoplastisches Polyamidharz eingesetzt, und zwar "Euremelt 2140" ®
Die Klebstoffschicht kann erfindungsgemäß eine Dicke von 10 µm bis 500 µm, insbesondere 20 µm bis 100 µm, aufweisen.

Vorteilhafterweise ist zwischen Farbschicht und Klebstoffschicht eine Sperrschicht, insbesondere aus Polyamid, vorhanden, wobei die Sperrschicht aufweist eine Dicke von 1 µm bis 20 µm, insbesondere 2 µm bis 5 µm. Das Polyamid stammt aus der Gruppe der Polyamid 6- Polyamid 66- oder Copolyamid 6/66-Produkte, stellt ein Gemisch dieser Polyamide dar oder enthält noch zusätzlich ein Polyamid aus den Ausgangsstoffen p,p'-Diaminodicyclohexylmethan / Adipinsäure. Solche Polyamide sind zum Beispiel unter dem Handelsnamen Ultramid" ® von der Firma BASF frei im Handel erhältlich. Alternativ kann auch eine Sperrschicht aus Polyvinylidendichlorid eingesetzt werden.

Schließlich kann auf der außen liegenden Seite der Farbschicht ein Laminierhilfsstreifen aufgebracht sein, vorzugsweise ein mit einem thermisch aktivierbaren, antiadhäsiven Wachs beschichtetes Papier. Thermisch aktivierbar heißt, daß das Wachs unter Hitzeeinwirkung schmilzt, und somit die Trennung zwischen dem Farbband und dem Papier möglich wird. Bevorzugt wird ein Papier eingesetzt, daß mit einem zwischen 60 °C und 90 °C aktivierbaren Wachs ausgerüstet ist, wobei das Wachs bevorzugt aus der Gruppe der Polyethylenglykole stammt. Ein solches beschichtetes Papier ist zum Beispiel von der Firma Hoffmann & Engelmann unter dem Handelsnamen Metapapier SB 342 ® frei im Handel erhältlich. Die Haftung zwischen Laminierhilfsstreifen und Farbschicht kann im Heißkaschierverfahren hergestellt werden. Alternativ kann die Haftung zwischen Laminierhilfsstreifen und Farbschicht auch mit einem handelsüblichen Silikonklebstoff erreicht werden.

Zum Verkleben wird das Farbband vorzugsweise auf das jeweilige Gummiteil auflaminiert. Vorteilhafterweise wird das Gummiteil zuvor mit einem Primer bestrichen, so daß sich eine Schichtdicke des Primers von ungefähr 10 µm ergibt.
Der Primer ist vorzugsweise eine Lösung eines thermoplastischen Polyamids, und zwar eine 1 % bis 10 % Lösung, besonders bevorzugt in einem Lösungsmittelgemisch aus Benzin und Ethanol.
Der Primer dient dazu, die Verbundfestigkeit des Farbbandes zur Gummioberfläche und die Langzeitbeständigkeit der Verklebung, sowie die Farbechtheit des Bandes weiter zu verbessern.

Das erfindungsgemäße Farbband dient insbesondere zur Verzierung von Autoreifen.

Das erfindungsgemäße Farbband zeigt in Kombination mit dem beschriebenen Primer hervorragende Produkteigenschaften, die auch für den Fachmann derartig nicht vorherzusehen waren.

Das Farbband ist insbesondere geeignet, um mittels eines von der Firma Stahlgruber Otto Gruber GmbH & Co zum Patent angemeldeten (Veröffentlichungsnummer DE 38 15 542 A1) und hergestellten Applikationsgerätes auf bereits vulkanisierte Autoreifen heiß auflaminiert zu werden, wobei es unerheblich ist, ob es sich um Alt- oder um Neureifen handelt. Des weiteren muß für die Auflaminierung der Reifen nicht einmal von der Felge abmontiert werden.

Die einzuhaltenden Laminierbedingungen lassen sich wie folgt charakterisieren:
- Temperatur : maximal 200 °C,
   ansonsten frei wählbar
- Druck : maximal 10 bar
   ansonsten frei wählbar
- Kontaktzeit : ungefähr 2 bis 3 Sekunden

Diese Bedingungen unterscheiden sich drastisch von den bei der Reifenfertigung üblichen Vulkanisationsbedingungen, bei denen insbesondere eine längere Reaktionszeit zur Verfügung steht.

Aufgrund des Schutzes durch den Laminierhilfsstreifen übersteht das Farbband die Druckreibungsbeanspruchung durch den heißen Stempel selbst an erhabenen Stellen (Ziffern, Buchstaben, Zeichen etc.) schadlos. Die thermisch aktivierbare Wachsbeschichtung des Papiers sorgt dafür, daß im Moment der Laminierung eine Trennung zwischen Farbband und Papierstreifen stattfindet, so daß der Papierstreifen gemäß der Konstruktion des Applikationsgerätes abgeführt werden kann. Das Farbband haftet sofort am Reifen. Die durch die Auswahl der eingesetzten Komponenten in dem Aufbau gemäß obiger Beschreibung bedingte Flexibilität, d.h. Dehnbarkeit, des Bandes sorgt dafür, daß das Band ohne einzureißen und ohne Falten zu bilden sich der Kreisform des Reifens anpaßt. Das Band schmiegt sich auch an erhabene Stellen des Reifens glatt an.

Die Beständigkeit des auf den Reifen geklebten Farbbandes gegenüber Ablösung oder Rißbildung im späteren Fahrbetrieb, d.h. die Widerstandsfähigkeit gegenüber der Walkbeanspruchung, wird durch eine Vorbehandlung der Reifenseitenfläche mit dem oben beschriebenen Primer erheblich verbessert. Es genügt ein dünner Pinselstrich auf die zuvor gut gereinigte Reifenseitenfläche. Im Reifenprüfstandlauf kam es ohne Primer meist schon nach 5000 km zu Rißbildungen und Ablösungen, mit Primer wurden Rißbildungen und Ablösungen auch nach 60000 km nicht beobachtet. Überraschenderweise wurde im Reifenprüfstandtest gefunden, daß auch die Beständigkeit der Farbe des Streifens durch den Primer erheblich verbessert wird.

Ohne Schutzmaßnahmen wäre die Farbschicht bereits nach kurzer Zeit durch die in jedem Reifen enthaltenen, stark migrierenden und verfärbenden Alterungsschutzmittel unansehnlich. Eine Maßnahme ist daher der Einbau einer Sperrschicht in das Farbband. Es stellte sich nun heraus, daß die Sperrschicht allein nicht ausreicht. Erst in Verbindung mit dem Primer, der für sich allein keine signifikante Sperrwirkung hat, wird eine befriedigende Farbechtheit erhalten. Es wird angenommen, daß die Sperrschicht ohne Primer durch die Walkarbeit des Reifens nach und nach perforiert wird, obwohl die Sperrschicht in einer Schichtdicke von 2 µm bis 5 µm durchaus flexibel ist. Der Primer stellt offensichtlich einen mechanischen Puffer dar und fängt die an der Sperrschicht angreifenden Kräfte weitgehend ab.

Das Farbband ist durch die Auswahl der eingesetzten Komponenten gemäß obiger Beschreibung beständig gegen Witterungseinflüsse (Hitze, Kälte, Ozon, Sonneneinstrahlung, UV, Wasser) und gegen organische Lösungsmittel, insbesondere Benzin.

Dadurch, daß das Farbband nicht auf den Reifen vulkanisiert wird, sondern durch Schmelzklebung am Reifen zur Haftung gebracht wird, ist es von diesem auch wieder schadlos entfernbar, indem es zum Beispiel mit einem Heißluftfön über den Schmelzpunkt des Klebers erwärmt wird und dann einfach abgezogen wird.

Für kurzfristige Anwendungen des erfindungsgemäßen Farbbands sind die Sperrschicht und die Primerung des Autoreifens allerdings nicht notwendig.

Neben der besonders bevorzugten Verwendung des Farbbands zur Verzierung von Reifen lassen sich aber auch alle anderen Gummiteile mit dem Farbband markieren. Beispielhaft seien hier mit Abschnitten des erfindungsgemäßen Bands in auffälligen Farben versehene Gummipuffer oder -stopper genannt.

Im folgenden soll die Erfindung anhand von Ausführungsbeispielen näher erläutert werden, ohne die Erfindung damit einschränken zu wollen.

### Beispiele

In Tabelle 1 sind, mit Ausnahme der Lösungsmittel, alle zur Herstellung einer bevorzugten Ausführungsform des Farbbandes und des Primers verwendeten Materialien aufgeführt, und zwar jeweils mit Handelsnamen und Hersteller. Die genannten Materialien sind alle frei im Handel erhältlich.

**Tabelle 1:**

| Zur Herstellung des Farbbandes und des Primers eingesetzte Materialien mit Handelsname und Hersteller | | |
|---|---|---|
| Handelsname | Beschreibung | Hersteller |
| Euremelt 2140 ® | Polyamid-Schmelzklebstoff (Polykondensationsprodukt aus dimerisierten Fettsäuren und Diaminen) | Witco |
| Ultramid 1C ® | Polyamid | BASF |
| PUR-Farbe für Kunststoff FX 80-0617® | Farblack | BASF Lacke & Farben AG |
| PUR-Zusatzlack SC 29-0113® | Isocyanat-Härter | BASF Lacke & Farben AG |
| Dow Corning 282 ® | Silikon-Haftklebstoff | Dow Corning |
| Metapapier SB 342 ® | Wachspapier | Hoffmann & Engelmann |

In Tabelle 2 wird die Erfindung an drei Beispielen verdeutlicht:

**Tabelle 2:**

| Beispiele für den Produktaufbau des Farbbandes (ohne Laminierhilfsstreifen) | | | |
|---|---|---|---|
| | Beispiel 1 | Beispiel 2 | Beispiel 3 |
| Klebstoffschicht | Euremelt 2140 ® | Euremelt 2140 ® | Euremelt 2140 ® |
| Auftragsstärke | 30 g/m² | 40 g/m² | 60 g/m² |
| Sperrschicht | Ultramid 1C ® | Ultramid 1C ® | Ultramid 1C ® |
| Auftragsstärke | 3 g/m² | 3 g/m² | 3 g/m² |
| Farbschicht | FX 80-0617 ® | FX 80-0617 ® | FX 80-0617 ® |
| Verhältnis Farbe:Härter | 85:15 | 85:15 | 87:13 |
| Auftragsstärke | 80 g/m² | 60 g/m² | 60 g/m² |
| Gesamtdicke | 110 µm | 100 µm | 120 µm |
| Reißkraft* | 5,4 N/cm | 6,2 N/cm | 4,9 N/cm |
| Reißdehnung* | 180 % | 190 % | 210% |

| | | | |
|---|---|---|---|
| * Parameter der Reißdehnungsmessungen: Länge der Streifen: 5 cm Breite der Streifen: 1,5 cm Reißgeschwindigkeit: 100 mm / min Temperatur: 23 °C | | | |

Euremelt 2140 ® wurde in den angegebenen Auftragsstärken im Extrusionsverfahren auf handelsübliches Trennpapier aufgetragen. Ultramid 1C ® wurde aus einer 10 %igen Lösung (in Ethanol / Wasser 85:15) auf die Euremelt-Schicht gestrichen. Darauf wurde die Farbschicht, deren Topfzeit ca. 2,5 h betrug, in den angegebenen Verhältnissen Farblack:Härter aufgetragen und im Trockenkanal bei 120 °C gehärtet. In allen Beispielen wurde auf die Farbschicht noch der Silikonhaftkleber Dow Corning 282 ® in einer Auftragsstärke von 2,5 µm gestrichen. Sodann wurde das Metapapier SB 342 ® zukaschiert und das Trennpapier ausgedeckt.

Der Primer wurde in den Beispielen hergestellt, indem Euremelt 2140 ® durch Rühren in einer Konzentration von 4 % in einem Ethanol / Benzin - Gemisch (50:50) gelöst wurde.

Die Applikation am Reifen erfolgte in den Beispielen in folgender Weise:
Die Reifenseitenwand wurde zunächst mit einer Reinigerlösung, zum Beispiel mit einem Spezialreiniger von der Firma Stahlgruber Otto Gruber GmbH & Co ("TipTop-Spezialreiniger" ®), gründlich gesäubert. Sodann wurde im Pinsel- oder Lappenauftragsverfahren der Primer in einer Schichtdicke von ca. 7 g/m² aufgetragen. Dazu wurde die Reifenseitenwand einmal mit der Primerlösung benetzt. Sodann erfolgte das Aufbringen des Farbbandes mit dem Applikationsgerät der Firma Stahlgruber.

Die Einstellungen am Gerät wurden in den Beispielen folgendermaßen gewählt:

| | |
|---|---|
| Temperatureinstellung | 155 °C |
| Betriebsdruck | 5 bar |

Die fertigen Reifen wurden einem Reifenprüfstanddauerlauf unterzogen.
Die Bedingunggen waren:

| | |
|---|---|
| Geschwindigkeit | 120 km/h |
| Last | 400 kg |
| Dauer | 470 h entspricht 56400 km. |

Es zeigte sich, daß es keine Ablösungen oder Einrisse des Farbbandes gab. Es trat nur eine leichte Oberflächenverfärbung auf, die abwaschbar war. Zum Vergleich ohne Primer aufgebrachte Streifen lösten sich dagegen schon nach wenigen Stunden Prüfstandlauf teilweise ab und zeigten erheblich stärkere Verfärbungen.

## Patentansprüche

1. Farbband zur Verzierung von Gummioberflächen, das den folgenden Aufbau aufweist:
a) eine Farbschicht aus einem 2-Komponenten-Polyurethanfarblack,
b) eine Klebstoffschicht.

2. Farbband nach Anspruch 1, dadurch gekennzeichnet, daß
zwischen Farbschicht und Klebstoffschicht eine Sperrschicht vorhanden ist.

3. Farbband nach den Ansprüchen 1 oder 2, dadurch gekennzeichnet, daß
auf der außen liegenden Seite der Farbschicht ein Laminierhilfsstreifen aufgebracht ist.

4. Farbband nach den Ansprüchen 1 bis 3, dadurch gekennzeichnet, daß
die Farbschicht eine Dicke von 10 µm bis 500 µm, insbesondere 40 µm bis 100 µm, aufweist.

5. Farbband nach den Ansprüchen 1 bis 4, dadurch gekennzeichnet, daß
die Klebstoffschicht ein thermoplastisches Polyamidharz ist, insbesondere das Polykondensationsprodukt aus dimerisierten Fettsäuren mit Diaminen.

6. Farbband nach den Ansprüchen 1 bis 5, dadurch gekennzeichnet, daß
die Klebstoffschicht eine Dicke von 10 µm bis 500 µm, insbesondere 20 µm bis 100 µm, aufweist.

7. Farbband nach den Ansprüchen 1 bis 6, dadurch gekennzeichnet, daß
die Sperrschicht ein Polyamid oder ein Polyvinylidendichlorid ist.

8. Farbband nach den Ansprüchen 1 bis 7, dadurch gekennzeichnet, daß
die Sperrschicht eine Dicke von 1 µm bis 20 µm, insbesondere 2 µm bis 5 µm, aufweist.

9. Farbband nach den Ansprüchen 1 bis 8, dadurch gekennzeichnet, daß
der Laminierhilsstreifen ein mit einem thermisch aktivierbaren, antiadhäsiven Wachs beschichtetes Papier ist.

10. Verfahren zum Verkleben des Farbbands gemäß zumindest einem der vorherigen Ansprüche, dadurch gekennzeichnet, daß
a) auf das Gummiteil gegebenenfalls ein Primer aufgebracht wird, und
b) das Farbband auf das Gummiteil auflaminiert wird.

11. Verfahren nach Anspruch 10, dadurch gekennzeichnet, daß
der Primer eine Lösung eines thermoplastischen Polyamids auf Basis von dimerisierten Fettsäuren und Diaminen ist, bevorzugt eine 1 bis 10 %ige Lösung, ganz besonders bevorzugt in einem Lösungsmittelgemisch aus Benzin und Ethanol.

12. Verwendung eines Farbbands nach den Ansprüchen 1 bis 11 zur Verzierung von Autoreifen.

## Claims

1. Paint tape for embellishing rubber surfaces, having the following construction:
a) a colour layer comprising a 2-component polyurethane paint;
b) an adhesive layer.

2. Paint tape according to Claim 1, characterized in that there is a barrier layer between colour layer and adhesive layer.

3. Paint tape according to Claims 1 or 2, characterized in that a laminating aid strip is applied on the outside of the colour layer.

4. Paint tape according to Claims 1 to 3, characterized in that the colour layer has a thickness of from 10 µm to 500 µm, in particular 40 µm to 100 µm.

5. Paint tape according to Claims 1 to 4, characterized in that the adhesive layer is a thermoplastic polyamide resin, in particular the polycondensation product of dimerized fatty acids with diamines.

6. Paint tape according to Claims 1 to 5, characterized in that the adhesive layer has a thickness of from 10 µm to 500 µm, in particular 20 µm to 100 µm.

7. Paint tape according to Claims 1 to 6, characterized in that the barrier layer is a polyamide or a polyvinylidene dichloride.

8. Paint tape according to Claims 1 to 7, characterized in that the barrier layer has a thickness of from 1 µm to 20 µm, in particular 2 µm to 5 µm.

9. Paint tape according to Claims 1 to 8, characterized in that the laminating aid strip is a paper coated with a heat-activatable, antiadhesive wax.

10. Method of adhesively bonding the paint tape according to at least one of the preceding claims, characterized in that
a) if desired, a primer is applied to the rubber part, and
b) the paint tape is laminated onto the rubber part.

11. Method according to Claim 10, characterized in that the primer is a solution of a thermoplastic polyamide based on dimerized fatty acids and diamines, preferably a solution with a strength of from 1 to 10%, with very particular preference in a solvent mixture comprising petroleum spirit and ethanol.

12. Use of a paint tape according to Claims 1 to 11 for embellishing tyres.

## Revendications

1. Bande teintée pour la décoration de surfaces en caoutchouc, qui présente la structure suivante :
a) une couche de peinture constituée d'une laque teintée de polyuréthane à deux composants,
b) une couche de colle.

2. Bande teintée selon la revendication 1, caractérisée en ce qu'une couche d'arrêt se trouve entre la couche de peinture et la couche de colle.

3. Bande teintée selon les revendications 1 ou 2, caractérisée en ce qu'on a appliqué une bande auxiliaire de stratification sur la face de la couche de peinture se trouvant à l'extérieur.

4. Bande teintée selon les revendications 1 à 3, caractérisée en ce que la couche de peinture présente une épaisseur de 10 µm à 500 µm, en particulier de 40 µm à 100 µm.

5. Bande teintée selon les revendications 1 à 4, caractérisée en ce que la couche de colle est une résine polyamide thermoplastique, en particulier le produit de polycondensation d'acides gras dimérisés avec des diamines.

6. Bande teintée selon les revendications 1 à 5, caractérisée en ce que la couche de colle présente une épaisseur de 10 µm à 500 µm, en particulier de 20 µm à 100 µm.

7. Bande teintée selon les revendications 1 à 6, caractérisée en ce que la couche d'arrêt est un polyamide ou un poly(dichlorure de vinylidène).

8. Bande teintée selon les revendications 1 à 7, caractérisée en ce que la couche d'arrêt présente une épaisseur de 1 µm à 20 µm, en particulier de 2 µm à 5 µm.

9. Bande teintée selon les revendications 1 à 8, caractérisée en ce que la bande auxiliaire de stratification est un papier couché d'une cire anti-adhésive, thermiquement activable.

10. Procédé pour coller la bande teintée selon au moins l'une quelconque des revendications précédentes, caractérisé
a) en ce qu'on applique le cas échéant une couche de fond sur la pièce en caoutchouc et
b) en ce qu'on applique la bande teintée par stratification sur la pièce en caoutchouc.

11. Procédé selon la revendication 10, caractérisé en ce que la couche de fond est une solution d'un polyamide thermoplastique à base d'acides gras dimérisés et de diamines, de préférence une solution à 1 jusqu'à 10%, de manière particulièrement préférée dans un mélange de solvants d'essence et d'éthanol.

12. Utilisation d'une bande teintée selon les revendications 1 à 11 pour la décoration de pneus de voiture.
